# EUROPÄISCHE PATENTSCHRIFT

(11) **EP 3 911 927 B1**
(45) Veröffentlichungstag und Bekanntmachung des Hinweises auf die Patenterteilung: **21.02.2024**
(21) Anmeldenummer: 19839101.3
(22) Anmeldetag: 18.12.2019
(51) Int. Cl.: G01J 1/08, G01J 3/02, G01J 3/42, G01N 21/27

(54) **SPEKTROMETERSYSTEM UND VERFAHREN ZU DESSEN PRÜFUNG**
SPECTROMETER SYSTEM AND METHOD FOR TESTING OF SAME
SYSTÈME DE SPECTROMÈTRE ET PROCÉDÉ DE CONTRÔLE DE CELUI-CI

(30) Priorität: 19.02.2019 DE 102019104066
(43) Veröffentlichungstag der Anmeldung: 24.11.2021
(73) Patentinhaber: Carl Zeiss Spectroscopy GmbH, 07745 Jena (DE)
(72) Erfinder: KERSTAN, Felix, 07747 Jena (DE); GOBEL, Jürgen, 07749 Jena (DE)
(74) Vertreter: Engel, Christoph Klaus
(86) Internationale Anmeldenummer: PCT/EP2019/086039
(87) Internationale Veröffentlichungsnummer: WO 2020/169237

(56) Entgegenhaltungen:
- DE-A1- 19 548 378
- DE-A1-102004 021 448
- US-A1- 2008 290 279
- US-B1- 6 249 343
- US-B1- 6 420 695

## Beschreibung

Die vorliegende Erfindung betrifft ein Verfahren zum Prüfen eines Spektrometersystems, welches beispielsweise als ein Inhaltsstoffanalysesystem für landwirtschaftliche Erzeugnisse oder für Lebensmittel ausgebildet ist. Das Verfahren kann ergänzend auch zum Rekalibrieren des Spektrometersystems ausgebildet sein. Im Weiteren betrifft die Erfindung ein Spektrometersystem.

Die DE 10 2007 029 405 A1 lehrt einen Wellenlängen- und Intensitätsstandard für Spektrometer, welcher insbesondere zur Kalibrierung und Prüfung von Messköpfen von Spektrometern vorgesehen ist. Der Standard umfasst eine Fassung und einen in der Fassung angeordneten Plattenkörper aus transparentem Kunststoff mit einer hohen Festigkeit und Formstabilität über einen großen Temperaturbereich. Der Kunststoff besitzt im gesamten NIR-Bereich ausgeprägte Absorptionsbanden und eine solche chemische Struktur und Zusammensetzung, welche zuverlässig und zeitstabil eine hohe Feuchtigkeitsbarriere gegen Wasseraufnahme und Wasserabgabe gewährleisten soll. Der Plattenkörper besteht vorteilhaft aus einem amorphen, transparenten Copolymer auf der Basis von cyclischen und/oder linearen Olefinen.

Die DE 698 36 166 T2 betrifft einen Wellenlängenstandard für den sichtbaren Bereich und den Infrarotbereich zum Gebrauch bei der Analyse und Identifizierung von Materialen. Der Wellenlängenstandard umfasst einen Betonmix mit einem in der Matrix verteilten Seltenerdoxid.

Die DE 10 2004 021 448 A1 zeigt einen spektrometrischen Reflexionsmesskopf mit einer internen Rekalibrierung, welcher aus einem mit einem Fenster versehenen Gehäuse besteht, in welchem eine Beleuchtungsquelle und eine Optikbaugruppe zum Sammeln und Einkoppeln des Messlichtes in einen Lichtleiter angeordnet sind. Das Gehäuse weist Verbindungen zu einer Spannungsquelle, zu einer Steuer- und Auswerteeinheit sowie zu einem Spektrometer auf. Im Gehäuse sind zusätzlich mindestens zwei Standards zur internen Rekalibrierung vorhanden, die wahlweise in den Strahlengang des Reflexionsmesskopfes zur Erfassung der Messdaten für die Rekalibrierung geschwenkt werden können.

Aus der DE 10 2004 048 103 A1 ist eine Anordnung zur Bestimmung der Bestandteile geernteter landwirtschaftlicher Produkte bekannt. Diese Anordnung umfasst einen spektrometrischen Messkopf, welcher aus einem mit einem Fenster versehenen Gehäuse besteht, in welchem eine Beleuchtungsquelle, eine Spektrometeranordnung und mindestens zwei Standards zur internen Rekalibrierung vorhanden sind. Die Standards können so in den Strahlengang des Messkopfes geschwenkt werden, dass das gesamte von der Beleuchtungsquelle ausgehende Messlicht zur Rekalibrierung verwendet wird.

Die DE 10 2018 103 509 B3 zeigt ein Verfahren zur probenrichtigen Messung mit einem mobilen Inhaltsstoffanalysesystem, welches ein Gehäuse mit Fenster, eine Schnittstelle für eine externe Referenzeinheit, eine Anzeige- und Bedieneinheit, eine Lichtquelle, ein optisches Spektrometer, eine Kamera, eine interne Referenzeinheit und eine elektronische Steuereinheit aufweist. Bei diesem Verfahren erfolgt eine Plausibilitätsprüfung eines gewählten Kalibrationsproduktes, wobei eine fehlerhafte Auswahl signalisiert und eine erneute Auswahl eines alternativen Kalibrationsproduktes initiiert wird. Während einer Messwertaufnahme werden die Temperatur und die relative Luftfeuchte am Messort und im Gehäuseinneren erfasst und überwacht, wobei unzulässige Abweichungen von durch das Kalibrationsprodukt vorgegebenen Temperaturwerten und relativen Luftfeuchten mit der Anzeige- und Bedieneinheit signalisiert werden.

Der angeführte Stand der Technik zeigt u. a. die Anwendung der Spektroskopie als Inline- und Atline-Messtechnik für landwirtschaftliche Erzeugnisse und Lebensmittel. Mithilfe der NIR-Spektroskopie können Feuchtigkeitswerte und Inhaltsstoffe der landwirtschaftlichen Erzeugnisse und Lebensmittel bestimmt werden. Die entsprechenden Messgeräte können stationär oder mobil ausgebildet sein. Da es sich bei der NIR-Spektroskopie um ein optisches Messverfahren handelt, hängt die Genauigkeit der Messung wesentlich von einer Schnittstelle zu einer Probe, d. h. von einem optischen Messfenster ab. Das Messfenster kann während einer Nutzung verschmutzen oder verkratzen. Auch kann das Messfenster beim Einsatz in einem landwirtschaftlichen Gerät durch Materialfluss abgearbeitet werden, sodass es ausgetauscht werden muss. Somit kommt es zu Veränderungen der Leistungsfähigkeit der Messungen, sodass es einer zyklischen Rekalibrierung unter Nutzung einer externen Referenz bedarf, wodurch ein erhöhter Aufwand erforderlich ist.

Die US 2008/0290279 A1 zeigt ein Verfahren zur Normierung eines IR-Spektrometers. Das Verfahren basiert darauf, dass Spektrallinien der im Spektrometer natürlich vorkommenden Luft genutzt werden. Beispielsweise wird die Absorptionsbande von CO₂ bei 2.350 cm⁻¹ genutzt. Eine Abweichung der gemessenen Wellenlänge der Absorptionsbande zum Referenzwert wird bestimmt, um das Spektrometer zu kalibrieren.

In der EP 2 092 296 B1 ist ein Verfahren für optische spektroskopische Messungen beschrieben, bei welchem ein Messkopf mit einer Beleuchtungsquelle, einer Sammeloptik und einer internen Referenz verwendet wird. Die interne Referenz wird durch die Beleuchtungsquelle beleuchtet und durch die Sammeloptik angesehen.

Die US 6,249,343 B1 zeigt einen Wellenlängenstandard, welcher Absorptionslinien von Gas, beispielsweise von Wasserdampf im Bereich von 1,3 µm nutzt.

Die DE 195 48 378 A1 lehrt ein Verfahren zur Herstellung der Vergleichbarkeit von Spektrometermessungen mit mehreren Messgeräteindividuen gleichen Typs einer Familie. Es wird darauf hingewiesen, dass natürliche Standards genutzt werden können, um Messinstrumente zu standardisieren, beispielsweise durch die Nutzung eines spektralen Absorptionsbandes eines Gases, um die Wellenlängenskalierung eines Spektrometers zu kalibrieren.

Die US 6,420,695 B1 lehrt ein Verfahren zur Wellenlängenkalibrierung einer Filtervorrichtung für elektromagnetische Strahlung. Die Filtervorrichtung ist in einer Vorrichtung enthalten, welche die spektrale Transmission eines Ausbreitungsmediums außerhalb der Vorrichtung misst. Es wird mindestens eine absorbierende Spektrallinie eines Gases ausgewählt, welches immer in natürlicher Form im Ausbreitungsmedium vorhanden ist.

Die Aufgabe der vorliegenden Erfindung besteht ausgehend vom Stand der Technik darin, ein Spektrometersystem prüfen und ggf. rekalibrieren zu können, ohne hierfür einen externen Wellenlängenstandard oder eine Linienlampe zu benötigen.

Die genannte Aufgabe wird gelöst durch ein Verfahren gemäß dem beigefügten Anspruch 1 sowie durch ein Spektrometersystem gemäß dem beigefügten nebengeordneten Anspruch 11.

Das erfindungsgemäße Verfahren dient zum Prüfen eines Spektrometersystems. Bei dem Spektrometersystem handelt es sich bevorzugt um ein optisches Messsystem zur Inhaltsstoffermittlung auf spektroskopischer Basis. Es dient bevorzugt zur Inhaltsstoffermittlung von landwirtschaftlichen Produkten oder Lebensmitteln. Das Spektrometersystem ist bevorzugt auf einer landwirtschaftlichen Maschine, wie beispielsweise einem Feldhäcksler, angeordnet und zur laufenden Prüfung eines landwirtschaftlichen Produktes ausgebildet. Das Spektrometersystem erlaubt bevorzugt eine Messung im UV-Bereich, im visuellen Bereich und/oder im NIR-Bereich. Das Spektrometersystem ist bevorzugt als ein Polychromator ausgebildet. Das Spektrometersystem ist bevorzugt für eine Reflexionsmessung ausgebildet.

Das Spektrometersystem umfasst ein mit einem Fenster versehenes Gehäuse. Das Fenster bildet ein Messfenster des Spektrometersystems. In dem Gehäuse sind eine

Beleuchtungsquelle, ein Spektrometer und mindestens ein Standard zur internen Rekalibrierung angeordnet. Die Beleuchtungsquelle ist bevorzugt durch einen breitbandigen thermischen Strahler gebildet. Die Beleuchtungsquelle ist bevorzugt durch einen Infrarot-Strahler, durch eine Halogenlampe oder durch eine LED-basierte Lichtquelle gebildet.

Bei dem mindestens einen Standard handelt es sich um eine körperliche Referenz zum Rekalibrieren des Spektrometersystems. Bei dem mindestens einen Standard handelt es sich insbesondere um einen Wellenlängenstandard, welcher ein Referenzspektrum aufweist. Der mindestens eine Standard ist bevorzugt weiterhin als ein Intensitätsstandard ausgebildet. Der Standard ist als ein Weiß-Standard ausgebildet, sodass er eine Weiß-Referenz bildet. Im Gehäuse sind bevorzugt zwei der Standards zur internen Rekalibrierung angeordnet. Dabei handelt es sich bevorzugt um einen Weiß-Standard und um einen Schwarz-Standard. Die Standards sind bevorzugt wahlweise in einen vom Spektrometer zum Fenster verlaufenden Strahlengang mechanisch einschwenkbar. Der jeweilige Standard wird dann von der Beleuchtungsquelle mit Licht beleuchtet, welches der Standard zum Spektrometer reflektiert.

Das Spektrometersystem umfasst bevorzugt eine Steuer- und Messsigalverarbeitungseinheit in Form einer Recheneinheit. Die Steuer- und Messsigalverarbeitungseinheit weist bevorzugt eine grafische Benutzeroberfläche auf, beispielsweise in Form eines Touchscreens. Auch weist die Steuer- und Messsigalverarbeitungseinheit bevorzugt Datenschnittstellen auf, welche bevorzugt drahtlos ausgebildet sind.

Das Spektrometersystem wird mit externen Standards bzw. externen Referenzen kalibriert. Dieses Kalibrieren erfolgt beispielsweise bei einer Werksabnahme. Erfindungsgemäß wird nach der Kalibrierung des Spektrometersystems ein Referenzspektrum mit dem Spektrometer unter Nutzung des im Gehäuse angeordneten Standards aufgenommen. Hierzu wird der Standard mit der Beleuchtungsquelle beleuchtet, und das vom Standard reflektierte Licht wird mit dem Spektrometer aufgenommen. Das Referenzspektrum wird bevorzugt unmittelbar nach der Kalibrierung des Spektrometersystems aufgenommen, sodass von einer sehr hohen Genauigkeit des Referenzspektrums ausgegangen werden kann.

Im Gehäuse ist ein Füllgas vorhanden, welches Absorptionsbanden aufweist. Da der Strahlengang des Lichtes von der Beleuchtungsquelle und des vom Standard reflektierten Lichtes durch das Füllgas verläuft, sind die spezifischen Absorptionsbanden des Füllgases im Referenzspektrum erkennbar. Erfindungsgemäß werden die spezifischen Absorptionsbanden des Füllgases im Referenzspektrum detektiert und erkannt. Es wird jeweils mindestens eine die jeweilige erkannte spezifische Absorptionsbande charakterisierende Wellenlänge gemessen, sodass Messwerte für die Wellenlängen der erkannten spezifischen Absorptionsbanden erhalten werden.

Zur Prüfung und ggf. für eine interne Rekalibrierung wird ein Prüfspektrum mit dem Spektrometer unter Nutzung des Standards aufgenommen. Dies erfolgt insbesondere dann, wenn mit dem Spektrometersystem zahlreiche Proben vermessen wurden und/oder eine relevante Zeitdauer nach dem Kalibrieren mit den externen Standards bzw. Referenzen vergangen ist. Das Prüfspektrum wird in gleicher Weise wie das Referenzspektrum aufgenommen.

Erfindungsgemäß werden die spezifischen Absorptionsbanden des Füllgases im Prüfspektrum detektiert und erkannt. Es wird jeweils mindestens eine die jeweilige erkannte spezifische Absorptionsbande charakterisierende Wellenlänge gemessen, sodass Messwerte für die Wellenlängen der erkannten spezifischen Absorptionsbanden erhalten werden.

In einem weiteren Schritt des Verfahrens wird geprüft, ob die Messwerte der Wellenlängen der im Prüfspektrum erkannten spezifischen Absorptionsbanden des Füllgases um nicht mehr als ein vorbestimmtes Maß von den Messwerten der Wellenlängen der im Referenzspektrum erkannten spezifischen Absorptionsbanden des Füllgases abweichen. Durch das vorbestimmte Maß ist definiert, ab wann die Ungenauigkeit der Messung mit dem Spektrometersystem so groß ist, dass eine geforderte Genauigkeit des Spektrometersystems nicht mehr erreicht wird. Weichen die Messwerte der Wellenlängen der im Prüfspektrum erkannten spezifischen Absorptionsbanden des Füllgases um nicht mehr als das vorbestimmte Maß von den Messwerten der Wellenlängen der im Referenzspektrum erkannten spezifischen Absorptionsbanden des Füllgases ab, so ist die Prüfung des Spektrometersystems positiv. Anderenfalls ist die Prüfung negativ.

Ein besonderer Vorteil des erfindungsgemäßen Verfahrens besteht darin, dass es eine schnelle und aufwandsarme Prüfung des Spektrometersystems erlaubt, ohne dass hierfür externe Referenzen oder Standards erforderlich sind. Stattdessen dienen der intern vorhandene Standard und die spezifischen Absorptionsbanden des grundsätzlich vorhandenen Füllgases als Referenz.

Erfindungsgemäß umfasst das Füllgas gelöstes Wasser in Form von Wasserdampf, sodass das Wasser eine Luftfeuchte bildet. Diese Voraussetzung ist in der Praxis ohnehin in nahezu allen Anwendungen gegeben. Die Luftfeuchte weist in einem Bereich von 0°C bis 70°C eine Sättigung auf, welche bevorzugt mindestens 10 % beträgt, was einen geringen Wert darstellt und dennoch für die Erkennung der Absorptionsbanden ausreichend ist. Entsprechend werden die spezifischen Absorptionsbanden des Wasserdampfes in dem Referenzspektrum und in dem Prüfspektrum erkannt. Bevorzugt wird mindestens eine im Wellenlängenbereich zwischen 1.300 nm und 2.050 nm liegende spezifische Absorptionsbande des Wasserdampfes in dem Referenzspektrum und in dem Prüfspektrum erkannt. Bevorzugt werden mehrere im Wellenlängenbereich zwischen 1.300 nm und 2.050 nm liegende spezifische Absorptionsbanden des Wasserdampfes in dem Referenzspektrum und in dem Prüfspektrum erkannt. Bei dem Füllgas kann sich aber auch um ein anderes Gas bzw. um ein Schutzgas handeln, oder die spezifischen Absorptionsbanden können durch andere Komponenten des Füllgases bewirkt werden.

Der im Gehäuse angeordnete Standard ist in einen vom Spektrometer zum Fenster verlaufenden Strahlengang einschwenkbar. Bei bevorzugten Ausführungsformen der Erfindung wird der Standard zur Aufnahme des Referenzspektrums und zur Aufnahme des Prüfspektrums jeweils in diesen Strahlengang eingeschwenkt, was bevorzugt durch einen Aktuator erfolgt, sodass dieser Vorgang automatisiert erfolgen kann.

Bei bevorzugten Ausführungsformen der Erfindung werden die Messwerte der Wellenlängen der im Prüfspektrum erkannten spezifischen Absorptionsbanden des Füllgases und die Messwerte der Wellenlängen der im Referenzspektrum erkannten spezifischen Absorptionsbanden des Füllgases durch eine 3-Punkt-Interpolation bestimmt. Das Prüfspektrum und das Referenzspektrum werden mit einer Auflösung im Wellenlängenbereich verarbeitet, welche bevorzugt höchstens 0,1 nm beträgt, was bevorzugt durch eine Verarbeitung des Prüfspektrums und des Referenzspektrums in einem Subpixel-Bereich erfolgt. Hierdurch kann eine Genauigkeit des Spektrometersystems geprüft werden, welche ±1 nm beträgt. Dies ist beispielsweise von Vorteil, wenn das Spektrometersystem als ein Prozessspektrometersystem auf einer landwirtschaftlichen Maschine, wie einem Feldhäcksler, ausgebildet ist, wo das Spektrometersystem großen Schock- und Vibrationsbelastungen über einen langen Zeitraum ausgesetzt ist.

Das erfindungsgemäße Verfahren umfasst bevorzugt weitere Schritte, welche während des bestimmungsgemäßen Betriebes des Spektrometersystems, d. h. während des Ausmessens einer Probe durchgeführt werden und dazu dienen, dem Nutzer des Spektrometersystems die Verlässlichkeit von Messwerten mitzuteilen. In einem Schritt wird zunächst ein Spektrum einer Probe mit dem Spektrometer aufgenommen. Hierzu wird die Probe mit der Beleuchtungsquelle beleuchtet, und das von der Probe reflektierte Licht wird mit dem Spektrometer aufgenommen. Es werden spezifische Absorptionsbanden der Probe und ggf. weitere spektrale Charakteristika im aufgenommenen Spektrum erkannt. In einem weiteren Schritt wird jeweils eine die jeweilige erkannte spezifische Absorptionsbande charakterisierende Wellenlänge gemessen, wodurch Messwerte der Probe erhalten werden. Es wird eine Meldung ausgegeben, dass die Messwerte der Probe eine Ungenauigkeit aufweisen, wenn die Messwerte der Wellenlängen der im Prüfspektrum erkannten spezifischen Absorptionsbanden des Füllgases um mehr als das vorbestimmte Maß von den Messwerten der Wellenlängen der im Referenzspektrum erkannten spezifischen Absorptionsbanden des Füllgases abweichen. Diese Meldung wird bevorzugt als eine Markierung der Messwerte in einer numerischen oder graphischen Anzeige der Messwerte ausgegeben. Die Meldung stellt bevorzugt eine Warnmeldung dar; insbesondere für den Fall, dass die Messwerte eine verringerte Genauigkeit aufweisen, aber noch verwendbar sind. Bevorzugt wird eine weitere Meldung ausgegeben, wenn die Messwerte der Wellenlängen der im Prüfspektrum erkannten spezifischen Absorptionsbanden des Füllgases um mehr als ein weiteres vorbestimmtes Maß von den Messwerten der Wellenlängen der im Referenzspektrum erkannten spezifischen Absorptionsbanden des Füllgases abweichen. Diese weitere Meldung stellt bevorzugt eine Eingriffsmeldung dar, durch welche bevorzugt eine interne Rekalibrierung gefordert oder ausgelöst wird.

Das erfindungsgemäße Verfahren ist bevorzugt weiterhin zum internen Rekalibrieren des Spektrometersystems ausgebildet, wofür es weitere Schritte umfasst. Es erfolgt zunächst ein Vergleichen der Messwerte der Wellenlängen der im Prüfspektrum erkannten spezifischen Absorptionsbanden des Füllgases mit den Messwerten der Wellenlängen der im Referenzspektrum erkannten spezifischen Absorptionsbanden des Füllgases. Ausgehend von diesem Vergleich wird eine Korrekturvorschrift bestimmt. Diese Korrekturvorschrift ist dazu geeignet, Messwerte des Spektrometers zu korrigieren, damit diese eine hohe Genauigkeit aufweisen. Die Korrekturvorschrift ist bevorzugt durch eine Korrekturfunktion oder durch einen Korrekturfaktor gebildet. Die Korrekturvorschrift wird zum Verarbeiten von Messwerten, welche mit dem Spektrometer aufgenommen werden, angewendet. Das interne Rekalibrieren des Spektrometersystems kann auf Veranlassung durch einen Nutzer und/oder dann erfolgen, wenn die Messwerte der Wellenlängen der im Prüfspektrum erkannten Absorptionsbanden des Füllgases um mehr als ein weiteres vorbestimmtes Maß von den Messwerten der Wellenlängen der im Referenzspektrum erkannten Absorptionsbanden des Füllgases abweichen.

Das erfindungsgemäße Spektrometersystem umfasst ein mit einem Fenster versehenes Gehäuse. In dem Gehäuse sind eine Beleuchtungsquelle, ein Spektrometer und mindestens ein Standard zur internen Rekalibrierung angeordnet. Das Spektrometersystem umfasst weiterhin eine Steuer- und Messsigalverarbeitungseinheit, welche zur Ausführung des erfindungsgemäßen Verfahrens konfiguriert ist. Die Steuer- und Messsigalverarbeitungseinheit ist bevorzugt zur Ausführung einer der beschriebenen bevorzugen Ausführungsformen des erfindungsgemäßen Verfahrens konfiguriert. Im Übrigen weist das erfindungsgemäße Spektrometersystem bevorzugt auch Merkmale auf, die im Zusammenhang mit dem erfindungsgemäßen Verfahren angegeben sind.

## Patentansprüche

1. Verfahren zum Prüfen eines Spektrometersystems, wobei das Spektrometersystem ein mit einem Fenster versehenes Gehäuse umfasst, in welchem eine Beleuchtungsquelle, ein Spektrometer und mindestens ein durch eine Weiß-Referenz gebildeter Standard zur internen Rekalibrierung angeordnet sind, wobei der Standard als ein Intensitätsstandard ausgebildet und in einen vom Spektrometer zum Fenster verlaufenden Strahlengang mechanisch einschwenkbar ist, und wobei das Verfahren folgende Schritte umfasst:
- Erkennen von spezifischen Absorptionsbanden eines im Gehäuse vorhandenen Füllgases in einem Referenzspektrum, welches nach einer Kalibrierung des Spektrometersystems mit dem Spektrometer unter Nutzung des Standards aufgenommen wurde, wozu der Standard mit der Beleuchtungsquelle beleuchtet und das vom Standard reflektierte Licht mit dem Spektrometer aufgenommen wurde, wobei der im Gehäuse angeordnete Standard zur Aufnahme des Referenzspektrums in einen vom Spektrometer zum Fenster verlaufenden Strahlengang eingeschwenkt wird, wobei jeweils eine die jeweilige erkannte spezifische Absorptionsbande charakterisierende Wellenlänge gemessen wird, sodass Messwerte für die Wellenlängen der erkannten spezifischen Absorptionsbanden erhalten werden, und wobei das Füllgas gelöstes Wasser in Form von Wasserdampf umfasst, sodass die spezifischen Absorptionsbanden des Wassersdampfes in dem Referenzspektrum und in dem Prüfspektrum erkannt werden;
- Aufnehmen eines Prüfspektrums mit dem Spektrometer unter Nutzung des Standards, wozu der Standard mit der Beleuchtungsquelle beleuchtet und das vom Standard reflektierte Licht mit dem Spektrometer aufgenommen wird, wobei der im Gehäuse angeordnete Standard zur Aufnahme des Prüfspektrums in einen vom Spektrometer zum Fenster verlaufenden Strahlengang eingeschwenkt wird;
- Erkennen der spezifischen Absorptionsbanden des Füllgases in dem Prüfspektrum, wobei jeweils eine die jeweilige erkannte spezifische Absorptionsbande charakterisierende Wellenlänge gemessen wird, sodass Messwerte für die Wellenlängen der erkannten spezifischen Absorptionsbanden erhalten werden; und
- Prüfen, ob die Messwerte der Wellenlängen der im Prüfspektrum erkannten spezifischen Absorptionsbanden des Füllgases um nicht mehr als ein vorbestimmtes Maß von den Messwerten der Wellenlängen der im Referenzspektrum erkannten spezifischen Absorptionsbanden des Füllgases abweichen.

2. Verfahren nach Anspruch 1, **dadurch gekennzeichnet, dass** eine Luftfeuchte im Füllgas mindestens 10 % beträgt.

3. Verfahren nach Anspruch 1 oder 2, **dadurch gekennzeichnet, dass** mindestens eine im Wellenlängenbereich zwischen 1.300 nm und 2.050 nm liegende spezifische Absorptionsbande des Wassersdampfes in dem Referenzspektrum und in dem Prüfspektrum erkannt wird.

4. Verfahren nach einem der Ansprüche 1 bis 3, **dadurch gekennzeichnet, dass** der Standard durch eine körperliche Referenz zum Rekalibrieren des Spektrometersystems gebildet ist, wobei es sich bei dem Standard um einen Wellenlängenstandard handelt, welcher ein Referenzspektrum aufweist.

5. Verfahren nach einem der Ansprüche 1 bis 4, **dadurch gekennzeichnet, dass** im Gehäuse zwei der Standards zur internen Rekalibrierung angeordnet sind, bei denen es sich um einen Weiß-Standard und um einen Schwarz-Standard handelt, welche wahlweise in einen vom Spektrometer zum Fenster verlaufenden Strahlengang mechanisch eingeschwenkt werden.

6. Verfahren nach einem der Ansprüche 1 bis 5, **dadurch gekennzeichnet, dass** die Messwerte der Wellenlängen der im Prüfspektrum erkannten spezifischen Absorptionsbanden des Füllgases und die Messwerte der Wellenlängen der im Referenzspektrum erkannten spezifischen Absorptionsbanden des Füllgases durch eine 3-Punkt-Interpolation bestimmt werden.

7. Verfahren nach einem der Ansprüche 1 bis 6, **dadurch gekennzeichnet, dass** das Prüfspektrum und das Referenzspektrum mit einer Auflösung im Wellenlängenbereich verarbeitet werden, welche höchstens 0,1 nm beträgt.

8. Verfahren nach einem der Ansprüche 1 bis 7, **dadurch gekennzeichnet, dass** es folgende weitere Schritte umfasst:
- Aufnehmen eines Spektrums einer Probe mit dem Spektrometer;
- Erkennen von spezifischen Absorptionsbanden der Probe im aufgenommenen Spektrum;
- Messen jeweils einer die jeweilige erkannte spezifische Absorptionsbande charakterisierende Wellenlänge, wodurch Messwerte der Probe erhalten werden; und
- Ausgeben einer Meldung, dass die Messwerte der Probe eine Ungenauigkeit aufweisen, wenn die Messwerte der Wellenlängen der im Prüfspektrum erkannten spezifischen Absorptionsbanden des Füllgases um mehr als das vorbestimmte Maß von den Messwerten der Wellenlängen der im Referenzspektrum erkannten spezifischen Absorptionsbanden des Füllgases abweichen.

9. Verfahren nach Anspruch 8, **dadurch gekennzeichnet, dass** die Meldung als eine Markierung der Messwerte in einer numerischen oder graphischen Anzeige der Messwerte ausgegeben wird.

10. Verfahren nach einem der Ansprüche 1 bis 9, **dadurch gekennzeichnet, dass** es weiterhin zum Rekalibrieren des Spektrometersystems ausgebildet ist, wofür es folgende weitere Schritte umfasst:
- Vergleichen der Messwerte der Wellenlängen der im Prüfspektrum erkannten spezifischen Absorptionsbanden des Füllgases mit den Messwerten der Wellenlängen der im Referenzspektrum erkannten spezifischen Absorptionsbanden des Füllgases;
- Bestimmen einer Korrekturvorschrift ausgehend von dem vorgenommen Vergleich des Messwerte; und
- Anwenden der Korrekturvorschrift zum Verarbeiten von Messwerten, welche mit dem Spektrometer aufgenommen werden.

11. Spektrometersystem; umfassend ein mit einem Fenster versehenes Gehäuse, in welchem eine Beleuchtungsquelle, ein Spektrometer und mindestens ein Standard zur internen Rekalibrierung angeordnet sind, wobei im Gehäuse ein Füllgas vorhanden ist, wobei der Standard durch einen Intensitätsstandard gebildet und in einen vom Spektrometer zum Fenster verlaufenden Strahlengang mechanisch einschwenkbar ist, und wobei das Spektrometersystem weiterhin eine Steuer- und Messsignalverarbeitungseinheit umfasst, welche zur Ausführung eines Verfahrens nach einem der Ansprüche 1 bis 10 konfiguriert ist.

## Claims

1. Method for testing a spectrometer system, wherein the spectrometer system comprises a housing provided with a window, an illumination source, a spectrometer and at least one standard for internal recalibration, formed by a white reference, being arranged in said housing, wherein the standard is formed as an intensity standard and mechanically pivotable into a beam path extending from the spectrometer to the window, and wherein the method comprises the following steps:
- identifying specific absorption bands of a fill gas, present in the housing, in a reference spectrum recorded by the spectrometer using the standard following a calibration of the spectrometer system, for which purpose the standard was illuminated by the illumination source and the light reflected by the standard was recorded by the spectrometer, with the standard arranged in the housing being pivoted into a beam path extending from the spectrometer to the window for the purpose of recording the reference spectrum, with a wavelength characterizing the respective identified specific absorption band being measured in each case such that measurement values are obtained for the wavelengths of the identified specific absorption bands, and with the fill gas comprising suspended water in the form of water vapor such that the specific absorption bands of water vapor are identified in the reference spectrum and in the test spectrum;
- recording a test spectrum with the spectrometer using the standard, for which purpose the standard is illuminated by the illumination source and the light reflected by the standard is recorded by the spectrometer, with the standard arranged in the housing being pivoted into a beam path extending from the spectrometer to the window for the purpose of recording the test spectrum;
- identifying the specific absorption bands of the fill gas in the test spectrum, with a wavelength characterizing the respective identified specific absorption band being measured in each case, such that measurement values are obtained for the wavelengths of the identified specific absorption bands; and
- testing whether the measurement values of the wavelengths of the specific absorption bands of the fill gas identified in the test spectrum deviate by no more than a specified measure from the measurement values of the wavelengths of the specific absorption bands of the fill gas identified in the reference spectrum.

2. Method according to Claim 1, **characterized in that** a humidity in the fill gas is at least 10%.

3. Method according to Claim 1 or 2, **characterized in that** at least one specific absorption band of water vapor located in the wavelength range between 1300 nm and 2050 nm is identified in the reference spectrum and in the test spectrum.

4. Method according to any of Claims 1 to 3, **characterized in that** the standard is formed by physical reference for recalibrating the spectrometer system, the standard being a wavelength standard which has a reference spectrum.

5. Method according to any of Claims 1 to 4, **characterized in that** two of the standards for internal recalibration are arranged in the housing, said standards being a white standard and a black standard which are electively mechanically pivoted into a beam path extending from the spectrometer to the window.

6. Method according to any of Claims 1 to 5, **characterized in that** the measurement values of the wavelengths of the specific absorption bands of the fill gas identified in the test spectrum and the measurement values of the wavelengths of the specific absorption bands of the fill gas identified in the reference spectrum are determined by a 3-point interpolation.

7. Method according to any of Claims 1 to 6, **characterized in that** the test spectrum and the reference spectrum are processed with a resolution of at most 0.1 nm in the wavelength range.

8. Method according to any of Claims 1 to 7, **characterized in that** it comprises the following further steps:
- recording a spectrum of a sample using the spectrometer;
- identifying specific absorption bands of the sample in the recorded spectrum;
- measuring a wavelength characterizing the respective identified specific absorption band in each case, as a result of which measurement values of the sample are obtained; and
- outputting a message that the measurement values of the sample have an inaccuracy if the measurement values of the wavelengths of the specific absorption bands of the fill gas identified in the test spectrum deviate by more than the specified measure from the measurement values of the wavelengths of the specific absorption bands of the fill gas identified in the reference spectrum.

9. Method according to Claim 8, **characterized in that** the message is output as a marking of the measurement values in a numerical or graphical display of the measurement values.

10. Method according to any of Claims 1 to 9, **characterized in that** it is furthermore designed to recalibrate the spectrometer system, for the purpose of which it comprises the following further steps:
- comparing the measurement values of the wavelengths of the specific absorption bands of the fill gas identified in the test spectrum with the measurement values of the wavelengths of the specific absorption bands of the fill gas identified in the reference spectrum;
- determining a correction rule on the basis of the undertaken comparison of the measurement values; and
- applying the correction rule for the purpose of processing measurement values recorded by the spectrometer.

11. Spectrometer system comprising a housing provided with a window, an illumination source, a spectrometer and at least one standard for internal recalibration being arranged in said housing, wherein a fill gas is present in the housing, wherein the standard is formed by an intensity standard and mechanically pivotable into a beam path extending from the spectrometer to the window, and wherein the spectrometer system furthermore comprises a control and measurement signal processing unit, which is configured to carry out a method according to any of Claims 1 to 10.

## Revendications

1. Procédé de vérification d'un système spectrométrique, le système spectrométrique comprenant un boîtier qui est pourvu d'une fenêtre et dans lequel sont disposés une source d'éclairage, un spectromètre et au moins un étalon formé par une référence blanche et destiné à effectuer un réétalonnage interne, l'étalon étant conçu comme un étalon d'intensité et pouvant être mécaniquement introduit par pivotement dans un trajet de faisceau s'étendant du spectromètre à la fenêtre, et le procédé comprenant les étapes suivantes :
- détecter des bandes d'absorption spécifiques d'un gaz de remplissage, présent dans le boîtier, dans un spectre de référence qui a été enregistré après étalonnage du système spectrométrique, comprenant le spectromètre, à l'aide de l'étalon, ce pour quoi l'étalon a été éclairé avec la source d'éclairage et la lumière réfléchie par l'étalon a été enregistrée avec le spectromètre, l'étalon disposé dans le boîtier étant introduit par pivotement dans un trajet de faisceau s'étendant du spectromètre à la fenêtre afin d'enregistrer le spectre de référence, une longueur d'onde qui caractérise la bande d'absorption spécifique détectée respective étant mesurée à chaque fois de façon à obtenir des valeurs de mesure des longueurs d'onde des bandes d'absorption spécifiques détectées, et le gaz de remplissage comprenant de l'eau dissoute sous forme de vapeur d'eau de façon à détecter les bandes d'absorption spécifiques de la vapeur d'eau dans le spectre de référence et dans le spectre de vérification ;
- enregistrement un spectre de vérification avec le spectromètre à l'aide de l'étalon, ce pour quoi l'étalon est éclairé avec la source d'éclairage et la lumière réfléchie par l'étalon est enregistrée avec le spectromètre, l'étalon disposé dans le boîtier et destiné à enregistrer le spectre de vérification étant introduit par pivotement dans un trajet de faisceau qui s'étend du spectromètre à la fenêtre ;
- détecter les bandes d'absorption spécifiques du gaz de remplissage dans le spectre de vérification, une longueur d'onde qui caractérise la bande d'absorption spécifique détectée respective étant mesurée à chaque fois de façon à obtenir des valeurs de mesurée des longueurs d'onde des bandes d'absorption spécifiques détectées ; et
- vérifier si les valeurs de mesure des longueurs d'onde des bandes d'absorption spécifiques du gaz de remplissage détectées dans le spectre de vérification ne s'écartent pas de plus d'une grandeur prédéterminée des valeurs de mesure des longueurs d'onde des bandes d'absorption spécifiques du gaz de remplissage détectées dans le spectre de référence.

2. Procédé selon la revendication 1, **caractérisé en ce que** l'humidité de l'air dans le gaz de remplissage est d'au moins 10 %.

3. Procédé selon la revendication 1 ou 2, **caractérisé en ce qu'**au moins une bande d'absorption spécifique de la vapeur d'eau, située dans la gamme de longueurs d'onde comprise entre 1300 nm et 2050 nm, est détectée dans le spectre de référence et dans le spectre de vérification.

4. Procédé selon l'une des revendications 1 à 3, **caractérisé en ce que** l'étalon est formé par une référence physique de réétalonnage du système spectrométrique, l'étalon étant un étalon de longueur d'onde qui comporte un spectre de référence.

5. Procédé selon l'une des revendications 1 à 4, **caractérisé en ce que** deux des étalons destiné au réétalonnage interne sont disposés dans le boîtier, lesquels sont un étalon blanc et un étalon noir qui sont facultativement introduits mécaniquement par pivotement dans un trajet de faisceau qui s'étend du spectromètre à la fenêtre.

6. Procédé selon l'une des revendications 1 à 5, **caractérisé en ce que** les valeurs de mesure des longueurs d'onde des bandes d'absorption spécifiques du gaz de remplissage détectées dans le spectre de vérification et les valeurs de mesure des longueurs d'onde des bandes d'absorption spécifiques du gaz de remplissage détectées dans le spectre de référence sont déterminées par une interpolation à 3 points.

7. Procédé selon l'une des revendications 1 à 6, **caractérisé en ce que** le spectre de vérification et le spectre de référence sont traités avec une résolution dans la gamme de longueurs d'onde au plus égale à 0,1 nm.

8. Procédé selon l'une des revendications 1 à 7, **caractérisé en ce qu'**il comprend les étapes supplémentaires suivantes :
- enregistrer un spectre d'un échantillon avec le spectromètre ;
- détecter des bandes d'absorption spécifiques de l'échantillon dans le spectre enregistré ;
- mesurer à chaque fois une longueur d'onde qui caractérise la bande d'absorption spécifique détectée respective, ce qui permet d'obtenir des valeurs de mesure de l'échantillon ; et
- délivrer un message qui indique que les valeurs de mesure de l'échantillon comporte une imprécision si les valeurs de mesure des longueurs d'onde des bandes d'absorption spécifiques du gaz de remplissage détectées dans le spectre de vérification s'écartent, de plus de la dimension prédéterminée, des valeurs de mesures des longueurs d'onde des bandes d'absorption spécifiques du gaz de remplissage détectées dans le spectre de référence.

9. Procédé selon la revendication 8, **caractérisé en ce que** le message est délivré sous la forme d'un marquage des valeurs de mesure dans un affichage numérique ou graphique des valeurs de mesure.

10. Procédé selon l'une des revendications 1 à 9, **caractérisé en ce qu'**il est en outre conçu pour le réétalonnage du système spectrométrique, ce pour quoi il comprend les étapes supplémentaires suivantes :
- comparer les valeurs de mesure des longueurs d'onde des bandes d'absorption spécifiques du gaz de remplissage détectées dans le spectre de vérification aux valeurs de mesure des longueurs d'onde des bandes d'absorption spécifiques du gaz de remplissage détectées dans le spectre de référence ;
- déterminer une règle de correction basée sur la comparaison des valeurs de mesure ; et
- appliquer la règle de correction au traitement de valeurs de mesure qui sont enregistrées avec le spectromètre.

11. Système spectrométrique comprenant un boîtier qui est pourvu d'une fenêtre et dans lequel sont disposés une source d'éclairage, un spectromètre et au moins un étalon destiné au réétalonnage interne, un gaz de remplissage étant présent dans le boîtier, l'étalon étant formé par un étalon d'intensité et pouvant être introduit mécaniquement par pivotement dans un trajet de faisceau qui s'étend du spectromètre à la fenêtre, et le système spectrométrique comprenant en outre une unité de traitement de signal de commande et de mesure qui est conçue pour mettre en œuvre un procédé selon l'une des revendications 1 à 10.
